Europäisches Patentamt

European Patent Office

Office européen des brevets

(19)

(11) Veröffentlichungsnummer: **0 335 162 B1**

(12) # EUROPÄISCHE PATENTSCHRIFT

(45) Veröffentlichungstag der Patentschrift: **21.10.92**

(51) Int. Cl.5: **B01D 11/02**, B09B 5/00

(21) Anmeldenummer: **89104468.7**

(22) Anmeldetag: **14.03.89**

(54) Verfahren sowie Vorrichtung zur Reinigung von Bodenschichten.

(30) Priorität: **31.03.88 DE 3810941**
**24.12.88 DE 3843836**

(43) Veröffentlichungstag der Anmeldung:
**04.10.89 Patentblatt 89/40**

(45) Bekanntmachung des Hinweises auf die
Patenterteilung:
**21.10.92 Patentblatt 92/43**

(84) Benannte Vertragsstaaten:
**AT BE CH DE ES FR GB IT LI LU NL**

(56) Entgegenhaltungen:
**WO-A-86/01439**
**DE-A- 2 047 684**
**DE-U- 8 804 344**
**US-A- 2 239 586**
**US-A- 4 582 611**

(73) Patentinhaber: **Philipp Holzmann AG**
**Taunusanlage 1**
**W-6000 Frankfurt 1(DE)**

(72) Erfinder: **Fischer, Joachim, Dipl.-Ing.,**
**Saarwerdenstrasse 41,**
**W-4047 Dormagen 5,(DE)**
Erfinder: **Mönnig, Andreas, Dr.-Ing.,**
**Von-Gahlen-Strasse 23,**
**W-4000 Düsseldorf 12,(DE)**

(74) Vertreter: **Patentanwälte Dipl.-Ing. Alex Sten-**
**ger Dipl.-Ing. Wolfram Watzke Dipl.-Ing.**
**Heinz J. Ring**
**Kaiser-Friedrich-Ring 70**
**W-4000 Düsseldorf 11(DE)**

## Beschreibung

Die Erfindung betrifft ein Verfahren zur Reinigung von schadstoffhaltigen Bodenschichten, bei dem mit einem in die Bodenschichten unter hohem Druck eingebrachten Reinigungsmedium die Schadstoffe an Ort und Stelle von den gelockerten Bodenpartikeln getrennt und mit dem an die Bodenoberfläche zurückgeführten Reinigungsmedium ausgetragen werden. Ein solches Verfahren ist aus der Broschüre der Philipp Holzmann AG "Planen und Bauen für den technischen Umweltschute", Nov. 1987, Seite 38, bekannt.

Die Erfindung betrifft ferner eine Vorrichtung zur Reinigung von schadstoffhaltigen Bodenschichten mittels eines durch ein Bohrrohr in die Bodenschichten eingebrachten, die Schadstoffe aufnehmenden Reinigungsmediums, das aus den Bodenschichten eventuell gemeinsam mit Bodenpartikeln abgesaugt und anschließend aufbereitet wird, wobei das Bohrrohr an seinem unteren Ende eine Bohrkrone sowie eine geringfügig oberhalb angeordnete Austrittsdüse für das unter hohem Druck stehende Reinigungsmedium aufweist.

Die Entfernung von Schadstoffen aus Bodenschichten wird in vielen Fällen durch die wechselnde Lagerung verschiedener Bodenschichten mit unterschiedlichen bodenmechanischen und physikalischen Eigenschaften behindert. In vielen Fällen müssen schadstoffbelastete Böden daher ausgehoben und außerhalb der eigentlichen Baugrube gereinigt werden. Kommen zum wechselnden Bodenaufbau jedoch auch noch beengte Platzverhältnisse und große Tiefen des verunreinigten Bodens hinzu, so werden die Kosten für den Bodenaushub durch umfangreiche Sicherungsmaßnahmen unverhältnismäßig hoch. In solchen Fällen ist es wünschenswert, den Boden vor Ort zu reinigen. Hierunter fallen u.a. biologische Bodenreinigungsverfahren, die jedoch insbesondere bei wechselnder Bodenschichtung nur bedingt anwendbar sind. Außerdem erstreckt sich der Zeitaufwand für biologische Reinigungsverfahren über mehrere Vegetationsperioden.

Ein in der DE-U-8.804.344 (Anmeldetag : 31.03.88) beschriebenes Verfahren zur Reinigung von schadstoffhaltigen Bodenschichten verwendet ein Bohrrohr, das aus einem das Reinigungsmedium in die Bodenschichten führenden Kernrohr sowie einem das Kernrohr umgebenden Mantelrohr besteht. Das Kernrohr ist an seinem unteren Ende mit einer Bohrkrone versehen, oberhalb deren sich eine Austrittsdüse für das unter hohem Druck stehende Reinigungsmedium befindet. Das Mantelrohr ist oberhalb der Austrittsdüse gegenüber dem Kernrohr abgedichtet und weist im Bereich seines unteren Endes eine Absaugöffnung für das schadstoffbeladene Reinigungsmedium auf. Über einen zwischen Mantelrohr und Kernrohr gebildeten Ringraum gelangt das schadstoffbeladene Reinigungsmedium unter der Wirkung einer Saugpumpe an die Erdoberfläche zurück und wird dort einer Aufbereitung zugeführt. Das mit der bekannten Vorrichtung durchführbare Bodenreinigungsverfahren wird entweder beim Absenken oder Ausfahren des sich drehenden Bohrrohres durchgeführt. Das über das Kernrohr zugeführte Reinigungsmedium verläßt die Austrittsdüse unter hohem Druck und dringt als Schneidstrahl horizontal in die zu reinigende Bodenschicht ein. Auf diese Weise werden die Körner des Bodens abgespritzt und Schadstoffe herausgelöst. Bedingt durch die fortschreitende axiale Bewegung des Bohrrohres gelangen die mit Reinigungsmedium durchtränkten Bodenschichten anschließend in den Wirkungsbereich der Absaugöffnung des Mantelrohres, werden von dort an die Erdoberfläche gefördert und anschließend einer Aufbereitung zugeführt.

Nachteilig bei dem Verfahren der DE-U-8.804.344 ist, daß die von dem Reinigungsvorgang erfaßte Bodensäule einen unterschiedlichen Durchmesser aufweisen kann, da je nach Aufbau der Bodenschicht die Durchdringungstiefe des Schneidstrahles und die Größe des jeweils gereinigten Bereiches um das Bohrrohr herum variiert. Dadurch kann es zu einer unerwünschten Beeinflussung schon gereinigter oder schadstoffreier Bodenbereiche kommen.

Der Erfindung liegt die **Aufgabe** zugrunde, ein Verfahren zur Reinigung von schadstoffhaltigen Bodenschichten, das eine gezielte Festlegung des durch den jeweiligen Reinigungsvorgang beaufschlagten Bodenbereiches erlaubt sowie eine jederzeitige Übersicht über den Verlauf der Grenze zwischen schadstoffhaltigen und gereinigten Bodenbereichen sicherstellt, sowie eine geeignete Vorrichtung dafür zu schaffen.

Zur technischen **Lösung** dieser Aufgabe wird bezüglich des Verfahrens vorgeschlagen, daß der in senkrechter Richtung fortschreitende Reinigungsvorgang jeweils innerhalb einer rohrförmigen, in den Boden eingebrachten Kammer durchgeführt wird, die für den Fortschritt der Reinigung in waagerechter Richtung versetzt in das Erdreich eingebracht wird.

Das erfindungsgemäße Verfahren bietet den **Vorteil,** dem Anwender eine genaue Festlegung des Verlaufs der Grenze zwischen schadstoffhaltigen und gereinigten Bodenbereichen zu ermöglichen, so daß eine gezielte Bestimmung der noch einer Reinigung zu unterziehenden Bodenbereiche vorgenommen werden kann. Insbesondere wird bei Anwendung des Verfahrens verhindert, daß mit Schadstoffen beladenes Reinigungsmedium in benachbarte, bereits gereinigte oder schadstofffreie Bereiche gelangt.

Bei einer Weiterentwicklung des Verfahrens werden nach Beendigung des jeweiligen Reinigungsvorganges zumindest Teile der dafür verwendeten Kammer dem Boden entnommen und in einen noch nicht gereinigten Bereich des Bodens versetzt. Von Vorteil ist es insbesondere, die Kammern beziehungsweise Teile der Kammern so zu versetzen, daß die Kammern ein waagerecht fortschreitendes Wabenmuster bilden. Bei Anwendung dieses "wandernden" Arbeitsverfahrens lassen sich auch größere Flächen einer systematischen Reinigung unterziehen, wobei der Verlauf der Grenze zwischen schadstoffhaltigen und gereinigten Bodenbereichen jederzeit eindeutig festgelegt ist.

Bezüglich der Vorrichtung wird zur technischen **Lösung** der Aufgabe eine das Bohrrohr umgebende und mindestens bis zur Tiefe der Bohrkrone in die Bodenschichten ragende, unten offene Kammer vorgeschlagen.

Gemäß weiterer Ausgestaltungen der Vorrichtung kann die Kammer durch ein zylindrisches Rohr gebildet werden oder aus mehreren sich vertikal erstreckenden Schalen zusammengesetzt sein, wodurch sich die Kammer insbesondere in Form eines Vielecks gestalten läßt.

Die Verbindung der Schalen untereinander kann gemäß einem weiteren Merkmal der Erfindung durch ineinander schiebbare Kupplungstücke bewerkstelligt werden, wodurch die Abschottung gegen ein Austreten von schadstoffbelastetem Reinigungsmedium zusätzlich verbessert wird.

Entsprechend weiterer Ausgestaltungen der Erfindung kann das Bohrrohr entweder axial unverschiebbar oder verschiebbar zur Kammer ausgebildet sein. Ist das Bohrrohr relativ zur Kammer verschiebbar, so ist es von Vorteil, eine radiale Führung für das Bohrrohr im Bereich der Kammer vorzusehen und auf diese Weise die Zentrierung des Bohrrohres sicherzustellen.

Bei einer weiteren Ausgestaltung der Erfindung ist die Kammer an ihrer Oberseite druckdicht abgeschlossen und mit einem Anschluß an eine Druckpumpe versehen. Auf diese Weise wird mit einfachen technischen Mitteln das Zuströmen des Reinigungsmediums zur Absaugöffnung unterstützt.

Mit der Erfindung wird außerdem vorgeschlagen, daß das Bohrrohr sich aus einem die Bohrkrone sowie die Austrittsdüse aufweisenden Kernrohr und einem das Kernrohr umgebenden Mantelrohr zusammensitzt, das oberhalb der Austrittsdüse gegenüber dem Kernrohr abgedichtet ist und im Bereich seines unteren Endes mit mindestens einer Absaugöffnung für das schadstoffbeladene Reinigungsmedium und an seinem oberen Ende mit einer Abflußöffnung für das im Ringraum zwischen Kernrohr und Mantelrohr an die Erdoberfläche geförderte, schadstoffbeladene Reinigungsmedium versehen ist. Dadurch ist mit einem einzigen Bohrrohr sowohl das Einbringen des Reinigungsmediums in die Bodenschichten als auch das Absaugen an Ort und Stelle durchführbar.

Bei einer Ausgestaltung ist vorgesehen, daß an die Abflußöffnung des Mantelrohres der Saugstutzen einer Saugpumpe angeschlossen ist. Die Saugpumpe kommt vor allem dann zur Anwendung, wenn das Absaugen des schadstoffbeladenen Reinigungsmediums aus nicht zu großen Tiefen erfolgt.

Bei Anwendung der Vorrichtung in großen Bohrtiefen hingegen empfiehlt es sich gemäß einer weiteren Ausgestaltung der Erfindung, im Bohrrohr mindestens eine Druckluftleitung anzuordnen, die oberhalb der Absaugöffnung im Ringraum zwischen Kernrohr und Mantelrohr mündet und nach dem Prinzip einer Luftstrahlpumpe das schadstoffbeladene Reinigungsmedium nach oben an die Erdoberfläche fördert.

Bei einer weiteren Ausgestaltung ist vorgesehen, daß die Absaugöffnung mit einem das Kernrohr umschließenden zylindrischen Sieb versehen ist. Auf diese Weise ist sichergestellt, daß nur das schadstoffbeladene Reinigungsmedium, nicht jedoch Teile des Bodens abgesaugt werden.

Um ein Zusetzen des Siebes und damit eine Verringerung der Absaugwirkung zu vermeiden, wird schließlich vorgeschlagen, das Sieb am Kernrohr oder am Mantelrohr zu befestigen und eine Kante des jeweils anderen Rohres so zu gestalten, daß infolge einer Relativbewegung zwischen den Rohren die Kante reinigend über die Sieboberfläche führbar ist.

Je nach Bodenart und Schadstoffverhalten kann damit gerechnet werden, daß ein Schlammgemisch sich innerhalb der Kammer nicht nach Boden und Schadstoff-Reinigungsmittel-Gemisch trennen läßt. Daher wird nach einer weiteren Ausgestaltung vorgesehen, innerhalb der Kammer zusätzlich eine Feststoffpumpe anzuordnen, mit der ein Schlammgemisch aus Bodenpartikeln, Schadstoffen und Reinigungsmittel auch aus größeren Tiefen sicher gefördert werden kann.

In weiterer Ausgestaltung wird die Förderleistung der Feststoffpumpe so gesteuert, daß der offene Grundwasserspiegel innerhalb der Kammer eine vorgegebene Tiefmarke nicht unterschreitet, um so einen hydraulischen Grundbruch am Fuße der Kammer zu vermeiden.

Bei Anwendung dieser Ausgestaltung wird das Schlammgemisch in einer Reinigungsanlage aufbereitet und die gereinigten Bodenpartikel wieder in die Kammer eingebaut, wobei je nach Erfordernis der Boden innerhalb der Kammer entweder mechanisch verdichtet und/oder durch Zugabe von Bindemittel und/oder duch Zugabe weiterer Stoffe optimiert werden kann.

Weitere Einzelheiten und Vorteile des Gegenstandes der Erfindung ergeben sich aus der nachfolgenden Beschreibung der zugehörigen Zeichnungen, in denen bevorzugte Ausführungsformen des erfindungsgemäßen Verfahrens und der erfindungsgemäßen Vorrichtung dargestellt sind. In den Zeichnungen zeigen:

Fig. 1 eine schematische Darstellung einer in den Boden abgesenkten Vorrichtung zur Reinigung von Bodenschichten mit Anschlüssen;

Fig. 2 einen Längsschnitt durch den unteren Teil der Vorrichtung gemäß Fig. 1 entsprechend der Schnittlinie II-II in Fig. 3;

Fig. 3 einen Querschnitt gemäß der Schnittlinie III-III in Fig, 2;

Fig. 4 eine schematische Darstellung einer in den Boden abgesenkten Vorrichtung zur Reinigung von Bodenschichten innerhalb einer abgesenkten Kammer;

Fig. 5 eine schematische Darstellung einer gleichzeitig mit einer Kammer in den Boden abgesenkten Vorrichtung zur Reinigung von Bodenschichten;

Fig. 6 in der Draufsicht ein Verfahren zur Reinigung von schadstoffhaltigen Bodenschichten in drei aufeinanderfolgenden Stufen;

Fig. 7 in Draufsicht ein Verfahren zur Reinigung von schadstoffhaltigen Bodenschichten bei einem im Vergleich zu Fig. 6 anderen Aufbau der Kammern;

Fig. 8 einen Detailausschnitt aus Fig. 7;

Fig. 9 in der Draufsicht ein Verfahren zur Reinigung schadstoffhaltiger Bodenschichten bei Einsatz von einem oder mehreren rohrförmigen Kammern und

Fig.10 eine schematische Darstellung einer in den Boden abgesenkten Vorrichtung zur Reinigung von Bodenschichten innerhalb der abgesenkten Kammer und einer zusätzlichen Feststoffpumpe.

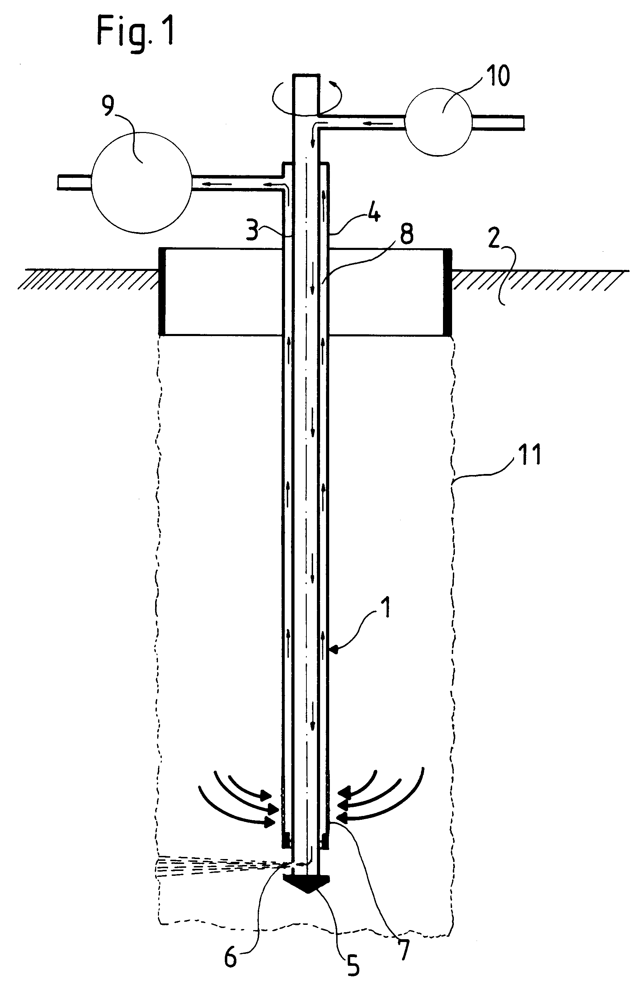

Die in Fig. 1 dargestellte Vorrichtung zur Reinigung von tiefliegenden, schadstoffhaltigen Bodenschichten ragt mit einem Bohrrohr 1 in den einer Reinigung zu unterziehenden Boden 2. Das Bohrrohr 1 besteht in erster Linie aus einem Kernrohr 3 und einem dieses umgebenden Mantelrohr 4. Das Kernrohr 3 und das Mantelrohr 4 sind an ihrem unteren Ende gegeneinander abgedichtet, wobei die aus dem Mantelrohr 4 herausragende Stirnfläche des Kernrohres 3 mit einer Bohrkrone 5 versehen ist, die unter Zwischenlage eines Distanzstückes 5a am Kernrohr 3 anliegt. Knapp oberhalb der Bohrkrone 5 weist das Kernrohr 3 mindestens eine seitliche Austrittsdüse 6 auf.

Eine Absaugöffnung 7 oberhalb der Austrittsdüse 6 steht über einen zwischen dem Kernrohr 3 und dem Mantelrohr 4 gebildeten Ringraum 8 mit einer Saugpumpe 9 in Verbindung, die ihrerseits an eine nicht dargestellte Aufbereitungsvorrichtung angeschlossen ist.

Über eine nicht dargestellte Vorrichtung ist das Bohrrohr 1 drehbar und mit einer axialen Kraft beaufschlagbar, so daß das Bohrrohr axial in das Erdreich vorgetrieben werden kann. Die Verdrängung des Erdreiches erfolgt dabei durch die mit entsprechenden Arbeitsflächen versehene Bohrkrone 5.

Über eine Hochdruckpumpe 10 wird Reinigungsmedium in das Innere des Kernrohres 3 gefördert, von wo aus das Reinigungsmedium unter hohem Druckabfall, aber mit großer Geschwindigkeit durch die Austrittsdüse 6 in die jeweilige Bodenschicht eindringt. Das stark gebündelt austretende Reinigungsmedium umspült dabei die jeweils erfaßten Bodenkörner und entfernt dabei die im Boden befindlichen Schadstoffe. Durch den sehr hohen Druck im Kernrohr 3 ist die Wirkung des austretenden Reinigungsmediums ähnlich der eines Schneidstrahles, wodurch zusätzlich eine Auflockerung der beaufschlagten Bodenschichten erfolgt. Durch die sowohl axiale als auch drehende Bewegung des Bohrrohres 1 beschreibt das aus der Austrittsdüse 6 austretende Reinigungsmedium eine zylindrische Bodensäule 11, die in der Fig. 1 gestrichelt dargestellt ist. Der Durchmesser der Bodensäule 11 hängt von der Reichweite des Schneidstrahles ab, die ihrerseits durch die Beschaffenheit des Bodens beeinflußt wird.

Gleichzeitig mit der Abgabe des unbeladenen Reinigungsmediums über die Austrittsdüse 6 erfolgt unter der Wirkung der Saugpumpe 9 ein Absaugen des bereits mit abgespülten Schadstoffen belasteten Reinigungsmediums über die Absaugöffnung 7. Dies geschieht vorzugsweise in der Weise, daß bei drehendem Einbringen des Bohrrohres 1 in den Boden die jeweiligen Bodenschichten zuerst durch den aus der Austrittsdüse 6 austretenden Schneidstrahl getränkt werden und, nachdem die entsprechenden Bodenschichten in den Wirkungsbereich der Absaugöffnung 7 gelangen, das beladene Reinigungsmedium durch die Wirkung der Saugpumpe 9 abgezogen und einer anschließenden Aufbereitung zugeführt wird. Der Abstand zwischen der Absaugöffnung 7 und der Austrittsdüse 6 läßt sich durch entsprechende Auswahl der Dicke des Distanzstückes 5a einstellen.

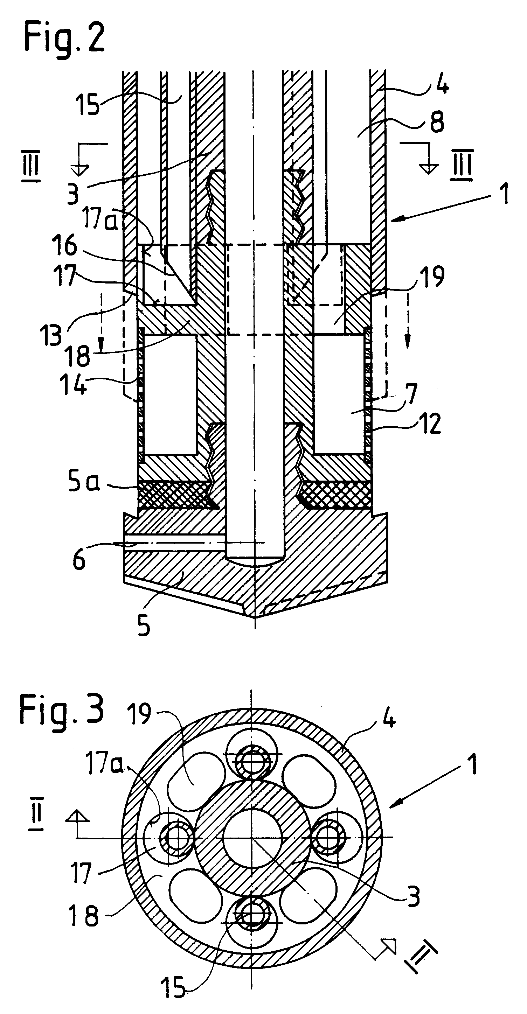

Aus den Detaildarstellungen der Figuren 2 und 3 ist zu erkennen, daß die Absaugöffnung 7 mit einem das Kernrohr 3 umschließenden zylindrischen Sieb 12 versehen ist, das ein Absaugen von Bodenpartikeln aus der das Sieb 12 umgebenden Bodenschicht verhindert. Um zu verhindern, daß sich das Sieb 12 durch die Anlagerung von Bodenpartikeln zusetzt, ist an der unteren Stirnseite des Mantelrohres 4 eine Kante 13 ausgebildet, die bei einer Relativbewegung zwischen Mantelrohr 4 und Kernrohr 3 reinigend über die äußere Mantelfläche 14 des beim Ausführungsbeispiel fest mit dem Kernrohr 3 verbundenen Siebes 12 schabt und dieses von unerwünschten Anlagerungen befreit.

Wie die Figuren 2 und 3 erkennen lassen, befindet sich im Ringraum 8 zwischen Mantelrohr 4 und Kernrohr 3 mindestens eine Druckleitung 15. Die Mündung 16 der Druckleitung 15 befindet sich etwas oberhalb der Absaugöffnung 7 und ist auf den Boden 17 eines Sacklochs 17a gerichtet, so daß über die Druckleitung 15 zuströmende Druckluft umgelenkt wird und über den Ringraum 8 wieder an das obere Ende des Bohrrohres 1 strömt. Das Sackloch 17a befindet sich in der Oberseite eines mit dem Kernrohr 3 verbundenen und axial von Durchtrittsöffnungen 19 durchbrochenen Ringflansches 18.

Wie insbesondere die Fig. 3 erkennen läßt, befinden sich die Sacklöcher 17a des Ringflansches 18 jeweils in Verlängerung der Druckleitungen 15, während die Durchtrittsöffnungen 19 jeweils dazwischen angeordnet sind. Auf diese Weise wird über die Druckleitungen 15 unter Druck einströmendes Gas, insbesondere Druckluft, am Boden 17 um 180° umgelenkt und unter Erzeugung eines Unterdrucks neben den Durchtrittsöffnungen 19 zum oberen Ende des Bohrrohres 1 zurückgeführt. Da die Querschnittsfläche des freien Ringraumes 8 größer ist als die gesamte Querschnittsfläche der Druckleitungen 15, entsteht im Bereich der Absaugöffnungen 7 ein Unterdruck. Dieser Saugeffekt wird ausgenutzt, um unter Wegfall der in Fig. 1 dargestellten Saugpumpe 9 den zur Absaugung des schadstoffbeladenen Reinigungsmediums notwendigen Unterdruck zu erzeugen. Diese letztgenannte Möglichkeit der Rückförderung des Reinigungsmediums ist vor allem dann anzuwenden, wenn aufgrund der großen Saughöhe eine Saugpumpe nicht mehr eingesetzt werden kann.

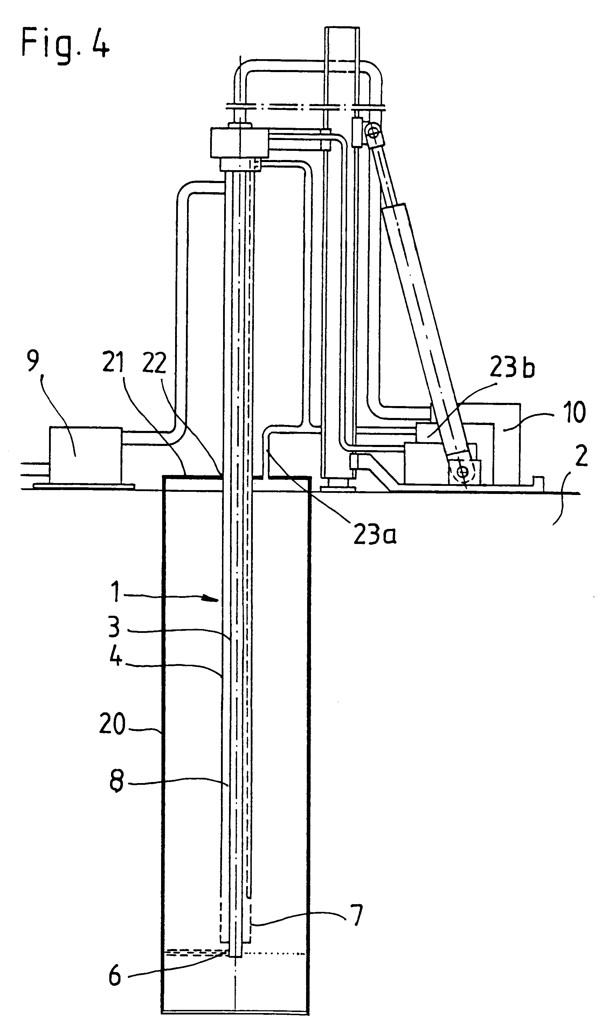

An dem in der Fig. 4 dargestellten Ausführungsbeispiel ist zu erkennen, daß das Bohrrohr 1 innerhalb einer in den Boden eingelassenen, als zylindrisches Rohr ausgebildeten Kammer 20 geführt ist. Die Kammer 20 ist an ihrer Oberseite durch einen Deckel 21 dicht verschlossen, wobei eine zentral angeordnete Öffnung 22 im Deckel 21 das Bohrrohr 1 radial führt. Die Kammer 20 ist soweit in den Boden 2 abgesenkt, daß ihre Unterkante tiefer liegt, als die Austrittsdüse 6 des Bohrrohres 1 in dessen tiefster Arbeitsstellung.

Bei dem Ausführungsbeispiel gemäß Fig. 4 sind die Kammer 20 und das Bohrrohr 1 axial zueinander verschiebbar angeordnet. Vor Einbringen des Bohrrohres 1 in den Boden 2 und damit vor Beginn des eigentlichen Reinigungsverfahrens wird die Kammer 20 senkrecht in den Boden 2 eingebracht, was beispielsweise mit Hilfe entsprechender hydraulischer Geräte bewerkstelligt werden kann. Anschließend beginnt mit dem Einfahren des Bohrrohres 1 der bereits beschriebene Reinigungsvorgang.

Der Deckel 21 der Kammer 20 ist über einen Druckstutzen 23a an eine Druckpumpe 23b, vorzugsweise zur Erzeugung von Druckluft angeschlossen, so daß an der Oberfläche des von der Kammer 20 umschlossenen Bodens ein Druckpolster zur Unterstützung der Absaugwirkung der Absaugöffnung 7 erzeugt wird.

Der innere Durchmesser der Kammer 20 sollte auf die Stärke des in Form eines Schneidstrahles aus der Austrittsdüse 6 austretenden Reinigungsmediums abgestimmt sein, wobei gewährleistet sein muß, daß der Schneidstrahl sicher die Innenwand der Kammer 20 erreicht, so daß die gesamten, innerhalb der Kammer 20 befindlichen Bodenschichten durchspült werden. Auch die Größe der Absaugwirkung über die Absaugöffnung 7 sollte so abgestimmt sein, daß ein sicheres Absaugen von beladenem Reinigungsmedium auch aus den wandnahen Bereichen der Kammer 20 gewährleistet ist.

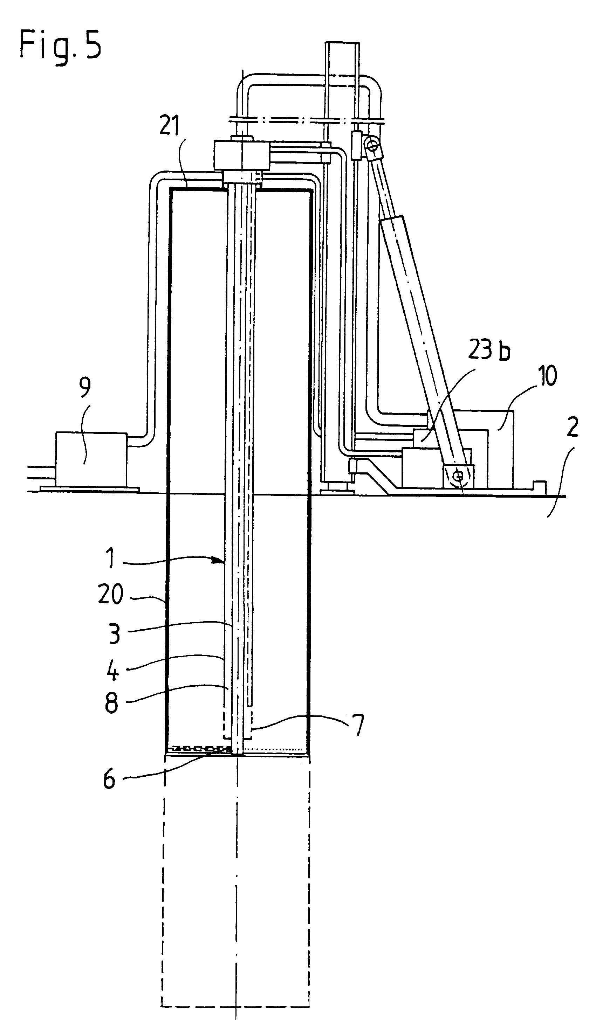

Das in der Fig. 5 dargestellte Ausführungsbeispiel der Erfindung unterscheidet sich von dem in Fig. 4 dargestellten Ausführungsbeispiel durch die axial unverschiebbare Anordnung von Bohrrohr 1 und Kammer 20 zueinander. Das Bohrrohr 1 und die Kammer 20 werden also gleichzeitig in den Boden 2 eingebracht. Dies kann entweder durch gleichzeitiges Eindrehen beider Teile geschehen oder durch Einrammen der Kammer 20 unter gleichzeitiger Mitnahme des sich drehenden Bohrrohres 1. Der eigentliche Reinigungsvorgang ist sowohl beim Absenken als auch beim Aufholen von Kammer 20 und Bohrrohr 1 durchführbar. Zusätzlich besteht die Möglichkeit, den Boden 2 während des Absenkens zu spülen und das schadstoffbeladene Reinigungsmedium während des anschließenden Aufholens abzusaugen.

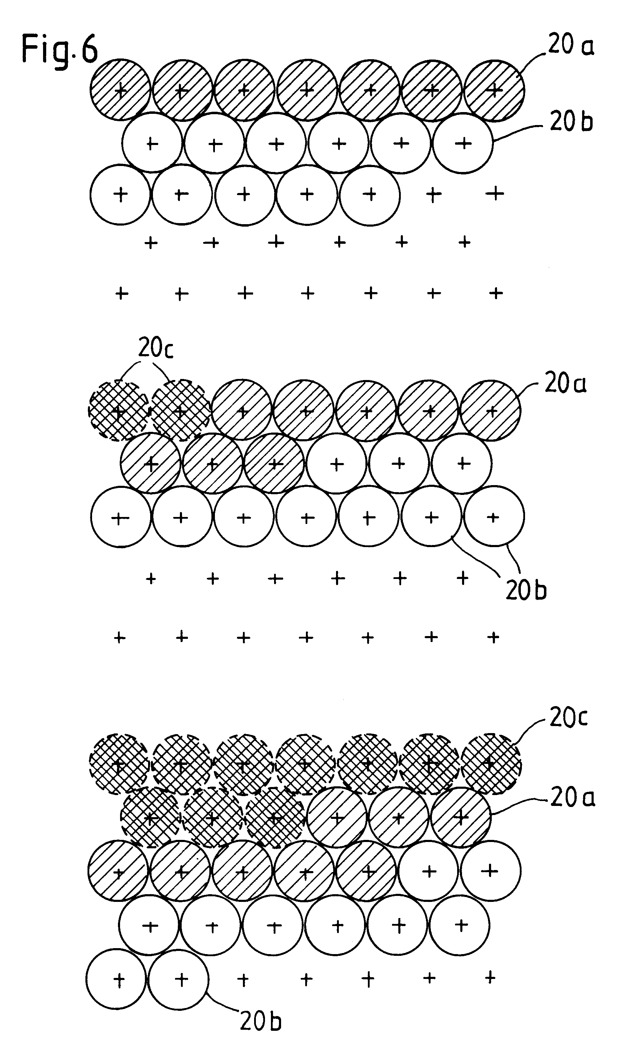

Vorteilhafterweise wird das Verfahren zur Reinigung von schadstoffhaltigen Bodenschichten nach dem in der Fig. 6 in drei Stufen dargestellten Ablaufschema durchgeführt. Im oberen Teil von Fig. 6 ist zu erkennen, wie in der schraffiert dargestellten Reihe von Kammern 20a der Reinigungsprozeß bereits abgeschlossen ist, während nahezu zwei weitere Reihen von unschraffiert dargestellten Kammern 20b bereits in den Boden abgesenkt sind, ohne daß der Reinigungsprozeß bereits begonnen hat. Mittelachsen noch zu setzender Kammern sind in Fig. 6 mit einem kleinen Kreuz bezeichnet.

Im mittleren Teil der Fig. 6 ist ein bereits fortgeschrittenes Verfahrensstadium dargestellt, in dem bereits zwei Kammern 20c dem Boden wieder entnommen und in die noch unvollständige Reihe noch nicht gereinigter Kammern 20b eingesetzt sind. Der Reinigungsprozeß ist bereits bis zur Hälfte der mittleren Reihe von Kammern fortgeschritten.

In dem im unteren Teil von Fig. 6 dargestellten, weiteren Verfahrensstadium ist bereits mehr als eine komplette Reihe von Kammern 20c dem Boden wieder entnommen und in Arbeitsrichtung weiter vorne wieder eingesetzt worden.

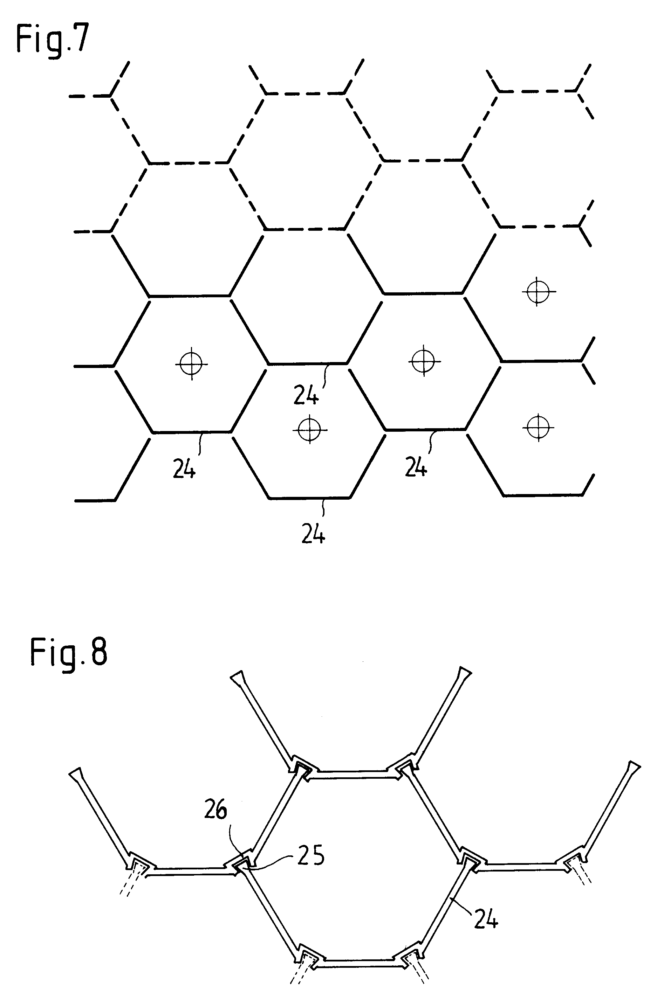

Wie Fig. 7 erkennen läßt, müssen die Kammern nicht als zylindrische Rohre ausgebildet sein, sondern sie können auch die Gestalt von Vielecken aufweisen, die sich aus mehreren vertikal in den Boden eingelassenen Schalen 24 zusammensetzen. Aus Fig. 7 ist zu erkennen, daß sich eine den Querschnitt eines Sechsecks aufweisende Kammer aus jeweils vier Schalen 24 zusammensetzen läßt, wobei diese Schalen 24 die Form eines an seiner Längsseite offenen Trapezes aufweisen.

In Fig. 8 ist schließlich dargestellt, daß die trapezförmigen Schalen 24 durch ineinander schiebbare Kupplungsstücke 25,26 miteinander verbunden werden können. Auf diese Weise werden die Schalen 24 während des Einbringens in den zu reinigenden Boden geführt, wobei als zusätzlicher Vorteil ein Entweichen von schadstoffbeladenem Reinigungsmedium in benachbarte Kammern durch die Kupplungsstücke 25,26 weitgehend vermieden wird. Selbstverständlich besteht auch die Möglichkeit, die Schalen 25,26 gleichzeitig mit dem Bohrrohr 1 in den Boden einzubringen. Dies kann gleichzeitig mit der Durchführung der Reinigung erfolgen.

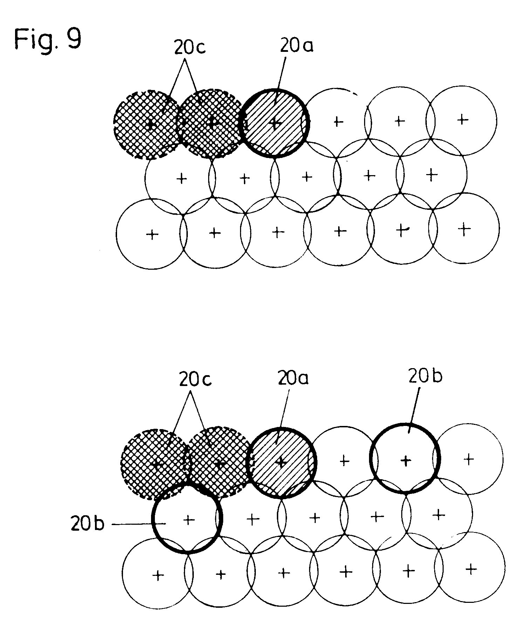

In Fig.9 ist dargestellt, daß die einzelnen rohrförmigen Kammern auch so angeordnet werden können, daß sich die zu reinigenden Bereiche überschneiden. Im oberen Teil der Fig.9 ist zu erkennen, daß in den doppelt schraffiert dargestellten Kammern 20c der Reinigungsprozeß bereits abgeschlossen und das Kammerrohr wieder ausgebaut ist, wogegen in dem daneben gezeichneten Kammerrohr 20a gereinigt wird. Die Mittelachsen noch zu setzender Kammern sind mit einem kleinen Kreuz bezeichnet, die Umrisse der Kammern sind mit dünnerer Strichstärke angedeutet. Der gesamte Reinigungsvorgang wird nur mit einem rohrförmigen Kammerrohr, das jeweils umgesetzt wird, durchgeführt. Im unteren Teil der Fig.9 ist schematisch dargestellt, daß gleichzeitig zwei oder mehr Kammerrohre im Einsatz sein können, wobei die Einsatzstellen so gewählt werden, daß sich die zu reinigenden Bereiche im vorgegebenen Maße überschneiden können.

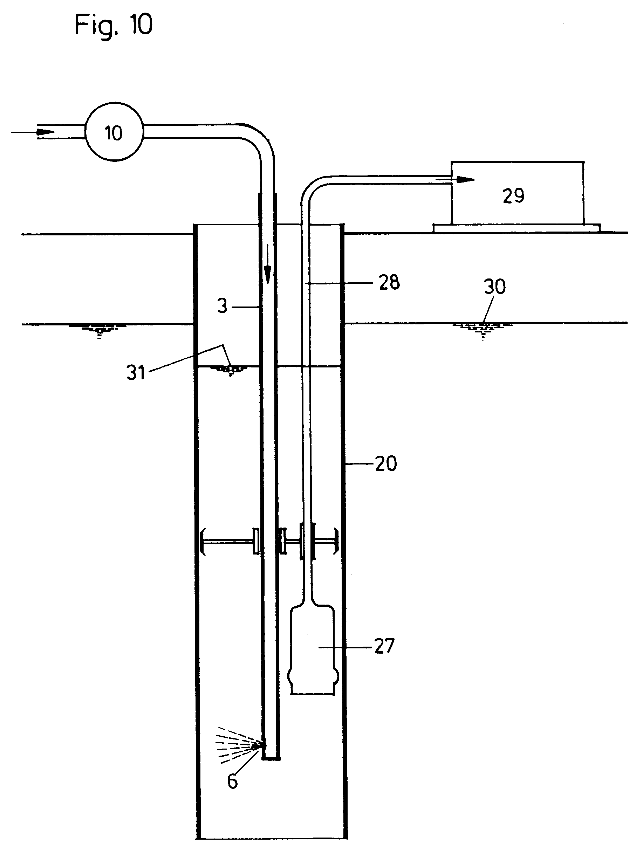

Fig.10 zeigt ein weiteres Ausführungsbeispiel der Erfindung. Innerhalb der Kammer 20 wird zusätzlich zum Kernrohr 3 mit der unteren Austrittsdüse 6 eine Feststoffpumpe 27 mit Förderleitung 28 angeordnet, die so gesteuert werden kann, daß die Förderleistung der Feststoffpumpe 27 nur soviel Schlammgemisch aus Bodenpartikeln, Schadstoffen und Reinigungsmittel fördert, daß der innerhalb der Kammer 20 vorhandene Grundwasserspiegel 31 nicht unter eine vorgegebene Tiefmarke absinken kann. Die Feststoffpumpe 27 fördert durch die Förderleitung 28 das Schlammgemisch in die oberirdische Reinigungsanlage 29.

**Bezugszeichenliste:**

| | |
|---|---|
| 1 | Bohrrohr |
| 2 | Boden |
| 3 | Kernrohr |
| 4 | Mantelrohr |
| 5 | Bohrkrone |
| 5a | Distanzstück |
| 6 | Austrittsdüse |
| 7 | Absaugöffnung |
| 8 | Ringraum |
| 9 | Saugpumpe |
| 10 | Hochdruckpumpe |
| 11 | Bodensäule |
| 12 | Sieb |
| 13 | Kante |
| 14 | Mantelfläche |
| 15 | Druckleitung |
| 16 | Mündung |
| 17 | Boden |
| 17a | Sackloch |
| 18 | Ringflansch |
| 19 | Durchtrittsöffnung |
| 20 | Kammer |
| 20a | in den Boden eingelassene, bereits gereinigte Kammern |
| 20b | in den Boden eingelassene, noch ungereinigte Kammern |
| 20c | dem Boden bereits entnommene Kammern |
| 21 | Deckel |
| 22 | Öffnung |
| 23a | Druckstutzen |
| 23b | Druckpumpe |
| 24 | Schale |
| 25 | Kupplungsstück |
| 26 | Kupplungsstück |
| 27 | Feststoffpumpe |
| 28 | Förderleitung |
| 29 | Reinigungsanlage |
| 30 | Grundwasserspiegel außen |
| 31 | Grundwasserspiegel in der Kammer |

**Patentansprüche**

1. Verfahren zur Reinigung von schadstoffhaltigen Bodenschichten, bei dem mit einem in die Bodenschichten unter hohem Druck eingebrachten Reinigungsmedium die Schadstoffe an Ort und Stelle von den gelockerten Bodenpartikeln getrennt und mit dem an die Bodenoberfläche zurückgeführten Reinigungsmedium ausgetragen werden,
**dadurch gekennzeichnet,**
daß der in senkrechter Richtung fortschreitende Reinigungsvorgang jeweils innerhalb einer rohrförmigen, in den Boden (2) eingebrachten Kammer (20) durchgeführt wird, die für den Fortschritt der Reinigung in waagerechter Richtung versetzt in das Erdreich eingebracht wird.

2. Verfahren nach Anspruch 1, dadurch gekennzeichnet, daß nach Beendigung des jeweiligen Reinigungsvorganges zumindest Teile der dafür verwendeten Kammern (20) dem Boden (2) entnommen und in einen noch nicht gereinigten Bereich des Bodens (2) versetzt werden.

3. Verfahren nach Anspruch 2, dadurch gekennzeichnet, daß die Kammern (20) bzw. Teile der Kammern (20) in der Weise versetzt werden, daß die Kammern (20) ein waagerecht fortschreitendes Wabenmuster bilden.

4. Verfahren nach Anspruch 3, dadurch gekennzeichnet, daß die Kammern (20) bzw. Teile der Kammern (20) in der Weise versetzt werden, daß gereinigte und ungereinigte Bereiche des Bodens (2) voneinander getrennt sind.

5. Verfahren nach Anspruch 1, dadurch gekennzeichnet, daß die Kammer (20) gleichzeitig mit einem das Reinigungsmedium führenden Bohrrohr (1) in die Bodenschichten eingebracht wird.

6. Verfahren nach Anspruch 1, dadurch gekennzeichnet, daß die rohrförmig in den Boden eingebrachten Kammern nacheinander so angeordnet werden, daß sich die zu reinigenden Bereiche Überschneiden.

7. Verfahren nach Anspruch 1 und 6, dadurch gekennzeichnet, daß nur mit einem Kammerrohr gearbeitet wird und daß das Kammerrohr nach dem Reinigungsvorgang in waagerechter Richtung versetzt wieder neu in das Erdreich eingebracht wird.

8. Verfahren nach Anspruch 1 und 6, dadurch gekennzeichnet, daß mit zwei oder mehr Kammerrohren gleichzeitig gearbeitet wird, wobei der Einbau der Kammerrohre, die Bodenreinigung und der Ausbau der Kammerrohre getrennt voneinander durchgeführt werden.

9. Verfahren nach Anspruch 1, dadurch gekennzeichnet, daß zum Austragen eines neben Schadstoffen und Reinigungsmittel auch Bodenpartikel enthaltenden Schlammgemischs eine Feststoffpumpe verwendet wird, welche das Schlammgemisch durch eine Förderleitung zu einer Reinigungsanlage pumpt.

10. Verfahren nach Anspruch 9, dadurch gekennzeichnet, daß die Förderleistung der Feststoffpumpe so gesteuert wird, daß der Grundwasserspiegel in der Kammer eine vorgegebene Tiefmarke nicht unterschreitet.

11. Verfahren noch Anspruch 9 oder 10, dadurch gekennzeichnet, daß zur Steuerung des Grundwasserspiegels in der Kammer zusätzlich Wasser in die Kammer von oben nachgefüllt wird.

12. Verfahren nach Anspruch 9 oder 11, dadurch gekennzeichnet, daß in der Reinigungsanlage aus dem Schlammgemisch gereinigte Bodenpartikel abgetrennt und diese wieder in die Kammer eingebaut werden.

13. Verfahren nach einem der Ansprüche 1 und 9 bis 12, dadurch gekennzeichnet, daß der gereinigte Boden je nach Erfordernis innerhalb der Kammer mechanisch verdichtet wird.

14. Verfahren nach einem der Ansprüche 1 und 9 bis 13, dadurch gekennzeichnet, daß der gereingte Boden durch Zugabe von Bindemittel optimiert wird.

15. Verfahren nach einem der Ansprüche 1 und 9 bis 14, dadurch gekennzeichnet, daß der gereinigte Boden durch Zugabe weiterer Stoffe optimiert wird.

16. Vorrichtung zur Reinigung von schadstoffhaltigen Bodenschichten mittels eines durch ein Bohrrohr (1) in die Bodenschichten eingebrachten, die Schadstoffe aufnehmenden Reinigungsmediums, das aus den Bodenschichten abgesaugt und anschließend aufbereitet wird, wobei das Bohrrohr (1) an seinem unteren Ende eine Bohrkrone (5) sowie eine geringfügig oberhalb angeordnete Austrittsdüse (6) für das unter hohem Druck stehende Reinigungsmedium aufweist, insbesondere zur Durchführung des Verfahrens nach den Ansprüchen 1 bis 5,
**gekennzeichnet durch**
eine das Bohrrohr (1) umgebende und mindestens bis zur Tiefe der Bohrkrone (5) in die Bodenschichten ragende und unten offene Kammer (20).

17. Vorrichtung nach Anspruch 16, dadurch gekennzeichnet, daß die Kammer (20) als zylindrisches Rohr ausgebildet ist.

18. Vorrichtung nach Anspruch 16, dadurch gekennzeichnet, daß die Kammer (20) aus mehreren, sich vertikal erstreckenden Schalen (24) zusammengesetzt ist.

19. Vorrichtung nach Anspruch 17 oder 18, dadurch gekennzeichnet, daß die Kammer (20) im Querschnitt die Form eines Vielecks aufweist.

20. Vorrichtung nach Anspruch 18, dadurch gekennzeichnet, daß die Schalen (24) durch ineinander schiebbare Kupplungsstücke (25,26) miteinander verbunden sind.

21. Vorrichtung nach Anspruch 16, dadurch gekennzeichnet, daß das Bohrrohr (1) axial unverschiebbar zur Kammer (20) ausgebildet ist.

22. Vorrichtung nach Anspruch 16, dadurch gekennzeichnet, daß das Bohrrohr (1) axial verschiebbar zur Kammer (20) ausgebildet ist.

23. Vorrichtung nach Anspruch 22, gekennzeichnet durch eine radiale Führung für das Bohrrohr (1) im oberen Bereich der Kammer (20).

24. Vorrichtung nach Anspruch 23, dadurch gekennzeichnet, daß die Kammer (20) an ihrer Oberseite durch einen Deckel (21) druckdicht abgeschlossen und mit einem Druckstutzen (23a) an eine Druckpumpe (23b) angeschlossen ist.

25. Vorrichtung nach Anspruch 16, dadurch gekennzeichnet, daß das Bohrrohr (1) aus einem die Bohrkrone (5) sowie die Austrittsdüse (6) aufweisenden Kernrohr (3) und einem das Kernrohr (3) umgebenden Mantelrohr (4) besteht, das oberhalb der Austrittsdüse (6) gegenüber dem Kernrohr (3) abgedichtet ist und im Bereich seines unteren Endes mit mindestens einer Absaugöffnung (7) für das schadstoffbeladene Reinigungsmedium und an seinem oberen Ende mit einer Abflußöffnung für das im Ringraum (8) zwischen Kernrohr (3) und Mantelrohr (4) an die Erdoberfläche geförderte, schadstoffbeladene Reinigungsmedium versehen ist.

26. Vorrichtung nach Anspruch 25, dadurch gekennzeichnet, daß an die Abflußöffnung des Mantelrohres (4) der Saugstutzen einer Saugpumpe (9) angeschlossen ist.

27. Vorrichtung nach Anspruch 25, dadurch gekennzeichnet, daß im Bohrrohr (1) mindestens eine Druckleitung (15) angeordnet ist, die oberhalb der Absaugöffnung (7) im Ringraum (8) zwischen Kernrohr (3) und Mantelrohr (4) mündet.

28. Vorrichtung nach mindestens einem der Ansprüche 25 bis 27, dadurch gekennzeichnet, daß die Absaugöffnung (7) mit einem das Kernrohr (3) umschließenden zylindrischen Sieb (12) versehen ist.

29. Vorrichtung nach Anspruch 28, dadurch gekennzeichnet, daß das Sieb (12) am Kernrohr (3) oder am Mantelrohr (4) befestigt ist und eine Kante (13) des jeweils anderen Rohres (4,3) infolge einer Relativbewegung zwischen den Rohren (3,4) reinigend über die Sieboberfläche (12) führbar ist.

**Claims**

1. A method of purifying polluted soil layers, in which a purifying medium introduced at high pressure into the soil layers separates the pollutants from the loosened soil particles on site and discharges the pollutants when returned to the surface, characterised in that the purification process, which progresses in the vertical direction, is carried out inside a tubular chamber (20) inserted into the soil (2) and moved in a horizontal direction in the earth in order to continue the purification process.

2. A method according to claim 1, characterised in that after each purification process, at least parts of the chambers (20) used for the purpose are withdrawn from the soil (2) and moved to a region of the soil (2) which has not yet been purified.

3. A method according to claim 2, characterised in that the chambers (20) or parts of the chambers (20) are moved so that the chambers (20) form a horizontally moving honeycomb pattern.

4. A method according to claim 3, characterised in that the chambers (20) or parts of the chambers (20) are moved so that purified and nonpurified regions of the soil (2) are separated from one another.

5. A method according to claim 1, characterised in that the chamber (20) is inserted into the soil layers together with a borehole tube (1) conveying the purifying medium.

6. A method according to claim 1, characterised in that the tubular chambers inserted into the soil are disposed one behind the other so that the regions for purification overlap.

7. A method according to claims 1 and 6, characterised in that only one chamber tube is used and after the purification operation the chamber tube is moved horizontally and re-inserted into the ground.

8. A method according to claims 1 and 6, characterised in that two or more chamber tubes are used simultaneously, the insertion of the chamber tubes, the purification of the ground, and the withdrawal of the chamber tubes being carried out separately.

9. A method according to claim 1, characterised in that mixed sludge containing pollutants, purifying agents and soil particles is removed by a solid-matter pump which pumps the mixed sludge through a delivery line to a purification plant.

10. A method according to claim 9, characterised in that the delivery rate of the solid-matter pump is controlled so that the ground-water level in the chamber does not fall below a preset depth mark.

11. A method according to claim 9 or 10, characterised in that in order to control the ground-water level in the chamber, additional water is introduced into the chamber from above.

12. A method according to claim 9 or 11, characterised in that purified soil particles are separated from the mixture of sludge in the purification plant and returned to the chamber.

13. A method according to any of claims 1 and 9 to 12, characterised in that the purified soil is mechanically compacted inside the chamber, depending on requirements.

14. A method according to any of claims and 9 - 13, characterised in that the purified soil is improved by adding binders.

15. A method according to any of claims 1 and 9 to 14, characterised in that the purified soil is improved by adding other substances.

16. A device for purifying polluted soil layers by using a purifying medium which is introduced through a borehole tube (1) into the soil layers and carries away the pollutants and is sucked out of the soil layers and subsequently processed, the borehole tube (1) having a drill bit (5) at its bottom end, slightly below an outlet nozzle (6) for highly pressurised purifying medium, more particularly for working the method according to claims 1 to 5, characterised by a downwardly open chamber (20) which surrounds the borehole tube (1) and extends into the soil layers at least as far down as the drill bit (5).

17. A device according to claim 16, characterised in that the chamber (20) is in the form of a cylindrical tube.

18. A device according to claim 16, characterised in that the chamber (20) is made up of a number of vertical shells (24).

19. A device according to claim 17 or 18, characterised in that the chamber (20) has a polygonal cross-section.

20. A device according to claim 18, characterised in that the shells (24) are interconnected by coupling members (25, 26) which slide inside one another.

21. A device according to claim 16, characterised in that the borehole tube (1) is made axially immovable relative to the chamber (20).

22. A device according to claim 16, characterised in that the borehole tube (1) is made axially movable relative to the chamber (20).

23. A device according to claim 22, characterised by a radial guide for the borehole tube (1) in the upper region of the chamber (20).

24. A device according to claim 23, characterised in that the top surface of the chamber (20) is closed in pressure-tight manner by a cover (21) and is connected to a pressure pump (23b) via a pressure nozzle (23a).

25. A device according to claim 16, characterised in that the borehole tube (1) comprises a core tube (3) containing the drill bit (5) and the outlet nozzle (6) and also comprises a jacket tube (4) surrounding the core tube (3) and sealed from the core tube (3) above the outlet nozzle (6), and near its bottom end the jacket tube is formed with at least one suction opening (7) for purifying medium loaded with pollutant, whereas its top end is formed with a discharge opening for purifying medium loaded with pollutant and conveyed to the surface through the annular space (8) between the core tube (3) and the jacket tube (4).

26. A device according to claim 25, characterised in that the suction nozzle of a suction pump (9) is connected to the discharge opening of the jacket tube (4).

27. A device according to claim 25, characterised in that at least one pressure line (15) is disposed in the borehole tube (1) and opens above the suction opening (7) into the annular space (8) between the core tube (3) and the jacket tube (4).

28. A device according to at least one of claims 25 to 27, characterised in that the suction opening (7) has a cylindrical screen (12) surrounding the core tube (3).

29. A device according to claim 28, characterised in that the screen (12) is secured to the core tube (3) or the jacket tube (4) and one edge (13) of the respective other tube (4, 3) can be guided over and clean the screen surface (12) as a result of relative motion between the tubes (3, 4).

**Revendications**

1. Procédé de décontamination de couches du sol renfermant des substances nocives, selon lequel, à l'aide d'un agent de décontamination introduit sous une pression élevée dans les couches du sol, les substances nocives sont séparées sur place des particules de sol ameublies, et sont évacuées avec l'agent de décontamination ramené à la surface du sol, caractérisé en ce que l'opération de décontamination qui progresse en direction verticale, s'effectue respectivement à l'intérieur d'une chambre (20) de forme tubulaire qui a été introduite dans le sol, et qui pour la progression de la décontamination est introduite dans le terrain en étant décalée en direction horizontale.

2. Procédé selon la revendication 1, caractérisé en ce qu'après l'achèvement de chaque opération de décontamination, au moins des parties des chambres (20) utilisées à cet effet, sont extraites du sol (2) et sont décalées vers une zone du sol (2) n'ayant pas encore été décontaminée.

3. Procédé selon la revendication 2, caractérisé en ce que les chambres (20) ou des parties des chambres (20) sont décalées de telle sorte que les chambres (20) forment un motif en nid d'abeilles progressant en direction horizontale.

4. Procédé selon la revendication 3, caractérisé en ce que les chambres (20) ou des parties des chambres (20) sont décalées de telle sorte que les zones décontaminées et non décontaminées du sol (2), sont séparées les unes des autres.

5. Procédé selon la revendication 1, caractérisé en ce que la chambre (20) est introduite dans les couches du sol, en même temps qu'un tube de forage (1) conduisant l'agent de décontamination.

6. Procédé selon la revendication 1, caractérisé en ce que les chambres de forme tubulaire introduites dans le sol, sont disposées successivement de manière à ce que les zones à décontaminer se chevauchent.

7. Procédé selon les revendications 1 et 6, caractérisé en ce que l'on travaille uniquement avec un seul tube de chambre, et en ce que le tube de chambre, après l'opération de décontamination, est à nouveau réintroduit dans le terrain après avoir été décalé en direction horizontale.

8. Procédé selon les revendications 1 et 6, caractérisé en ce que l'on travaille avec deux ou plusieurs tubes de chambre, la mise en place des tubes de chambre, la décontamination du sol et l'extraction des tubes de chambre s'effectuant de manière séparée.

9. Procédé selon la revendication 1, caractérisé en ce que pour l'extraction d'un mélange de boues renfermant, mis à part les substances nocives et l'agent de décontamination, également des particules de sol, on utilise une pompe à substances solides, qui refoule le mélange de boues au travers d'une conduite de refoulement, vers une installation de décontamination.

10. Procédé selon la revendication 9, caractérisé en ce que le débit de la pompe à substances solides est commandé de manière à ce que le niveau des eaux souterraines dans la chambre, ne passe pas endessous d'une profondeur prédéfinie.

11. Procédé selon la revendication 9 ou 10, caractérisé en ce que pour commander le niveau des eaux souterraines dans la chambre, de l'eau est envoyée en supplément dans la chambre, par le haut.

12. Procédé selon la revendication 9 ou 11, caractérisé en ce que dans l'installation de décontamination, des particules de sol décontaminées sont séparées du mélange de boues et sont à nouveau réintroduites dans la chambre.

13. Procédé selon l'une des revendications 1 et 9 à 12, caractérisé en ce que suivant les besoins, le sol décontaminé est comprimé mécaniquement à l'intérieur de la chambre.

14. Procédé selon l'une des revendications 1 et 9 à 13, caractérisé en ce que le sol décontaminé est optimisé par l'addition de liant.

15. Procédé selon l'une des revendications 1 et 9 à 14, caractérisé en ce le sol décontaminé est optimisé par l'addition d'autres substances.

16. Dispositif pour la décontamination de couches du sol renfermant des substances nocives, au moyen d'un agent de décontamination qui absorbe les substances nocives et est introduit dans les couches du sol à l'aide d'un tube de forage (1), et qui est aspiré hors des couches du sol et ensuite traité, le tube de forage (1) comportant à son extrémité inférieure, une couronne de forage (5) et, disposée légèrement au-dessus de celui-ci, une buse de sortie (6) pour l'agent de décontamination se trouvant sous forte pression, notamment pour la mise en oeuvre du procédé selon les revendications 1 à 5,
caractérisé par une chambre (20), ouverte vers le bas, entourant le tube de forage (1) et s'engageant dans les couches du sol au moins jusqu'à la profondeur du trépan de forage (5).

17. Dispositif selon la revendication 16, caractérisé en ce que la chambre (20) est réalisée sous la forme d'un tube cylindrique.

18. Dispositif selon la revendication 16, caractérisé en ce que la chambre (20) est réalisée par l'assemblage de plusieurs coques (24) s'étendant verticalement.

19. Dispositif selon la revendication 17 ou 18, caractérisé en ce que la chambre (20) présente en section droite, une forme de polygone.

20. Dispositif selon la revendication 18, caractérisé en ce que les coques (24) sont reliées entre-elles par l'intermédiaire de pièces d'accouplement (25, 26) pouvant être emboîtées l'une dans l'autre par coulissement.

21. Dispositif selon la revendication 16, caractérisé en ce que le tube de forage (1) est réalisé de manière à ne pas pouvoir coulisser axialement par rapport à la chambre (20).

22. Dispositif selon la revendication 16, caractérisé en ce que le tube de forage (1) est réalisé de manière à pouvoir coulisser axialement par rapport à la chambre (20).

23. Dispositif selon la revendication 22, caractérisé par un guidage radial pour le tube de forage (1) dans la zone supérieure de la chambre (20).

24. Dispositif selon la revendication 23, caractérisé en ce que la chambre (20) est fermée de manière étanche à la pression, sur son côté supérieur, au moyen d'un couvercle (21), et est raccordée à une pompe refoulante (23b) à l'aide d'un raccord de pression (23a).

25. Dispositif selon la revendication 16, caractérisé en ce que le tube de forage (1) est constitué d'un tube central (3) portant la couronne de forage (5) ainsi que la buse de sortie (6), et d'un tube-enveloppe (4) qui entoure le tube central (3), qui, au-dessus de la buse de sortie (6) est rendu étanche par rapport au tube central (3), qui au niveau de son extrémité inférieure, est pourvu d'au moins un orifice d'aspiration (7) pour l'agent de décontamination chargé en substances nocives, et qui à son extrémité supérieure est pourvu d'un orifice d'évacuation pour l'agent de décontamination chargé en substances nocives, ayant été transporté jusqu'à la surface du sol dans l'espace annulaire (8) entre le tube central (3) et le tube-enveloppe (4).

26. Dispositif selon la revendication 25, caractérisé en ce qu'à l'orifice d'évacuation du tube-enveloppe (4) est branché le raccord d'aspiration d'une pompe aspirante (9).

27. Dispositif selon la revendication 25, caractérisé en ce que dans le tube de forage (1) est disposée au moins une conduite sous pression (15) qui débouche, au-dessus de l'orifice d'aspiration (7), dans l'espace annulaire (8) entre le tube central (3) et le tube-enveloppe (4).

28. Dispositif selon l'une des revendications 25 à 27, caractérisé en ce que l'orifice d'aspiration (7) est muni d'un tamis cylindrique (12) entourant le tube central (3).

29. Dispositif selon la revendication 28, caractérisé en ce que le tamis (12) est fixé sur le tube central (3) ou sur le tube-enveloppe (4) et qu'un bord de l'autre tube respectif (4, 3) peut être guidé au-dessus de la surface extérieure du tamis (12) en vue de la nettoyer, par suite d'un mouvement relatif entre les tubes (3, 4).

Fig. 1

Fig.2

Fig.3

14

Fig. 4

# Fig. 5

# Fig.6

Fig.7

24

24

24

24

Fig.8

26

25

24

Fig. 9

Fig. 10